# EUROPEAN PATENT APPLICATION

(11) **EP 2 775 390 A1**
(43) Date of publication of application: **10.09.2014**
(21) Application number: 14158292.4
(22) Date of filing: 07.03.2014
(51) Int. Cl.: G06F 3/0488, G06F 9/54, G06F 17/30

(54) **Web Page Providing Method and Apparatus**

(30) Priority: 07.03.2013 KR 20130024608
(71) Applicant: Samsung Electronics Co., Ltd., Suwon-si Gyeonggi-do 443-742 (KR)
(72) Inventor: Kim, Jeong-Seop, 443-742 Gyeonggi-do (KR)
(74) Representative: Gover, Richard Paul

(57) **Abstract**

A method and apparatus for providing web pages is disclosed. The method includes providing a main page including a plurality of links for web pages; adding, when at least one link is selected on the main page, the selected at least one link to a collect view list; configuring a collect view page by collecting web page data corresponding to the links added to the collect view list; and providing the collect view page.

## Description

### BACKGROUND OF THE INVENTION

### 1. Field of the Invention

The present invention relates generally to a method and apparatus for providing web pages, and more particularly, to a method and apparatus for providing web pages corresponding to a plurality of links on a main web page.

### 2. Description of the Related Art

The various services and functions provided by mobile devices have been gradually expanding. In order to enhance the effective value of mobile devices and to satisfy users' desires, various applications capable of being executed on mobile devices have been developed.

A mobile device stores and executes basic applications produced and installed by the manufacturer of the mobile device, as well as additional applications bought and downloaded from, e.g., the Internet. The additional applications may be developed by general developers and registered on web sites that sell applications. Anyone may freely sell applications that they developed by themselves to mobile device users through such web sites. As a result, tens of thousands to hundreds of thousands of applications are available for mobile devices free of charge or at costs which vary among different products.

In general, web browsers have been developed for use in personal computers (PCs), laptop computers, and the like. However, when a web browser developed for use on a PC or a laptop computer is used in a mobile device, it is difficult to see text, images, and other content displayed in the web browser as well as to control the web browser since mobile devices have relatively small displays compared to PCs or laptop computers. Web browser applications which allow web pages to be used more conveniently in mobile devices have been variously developed and distributed.

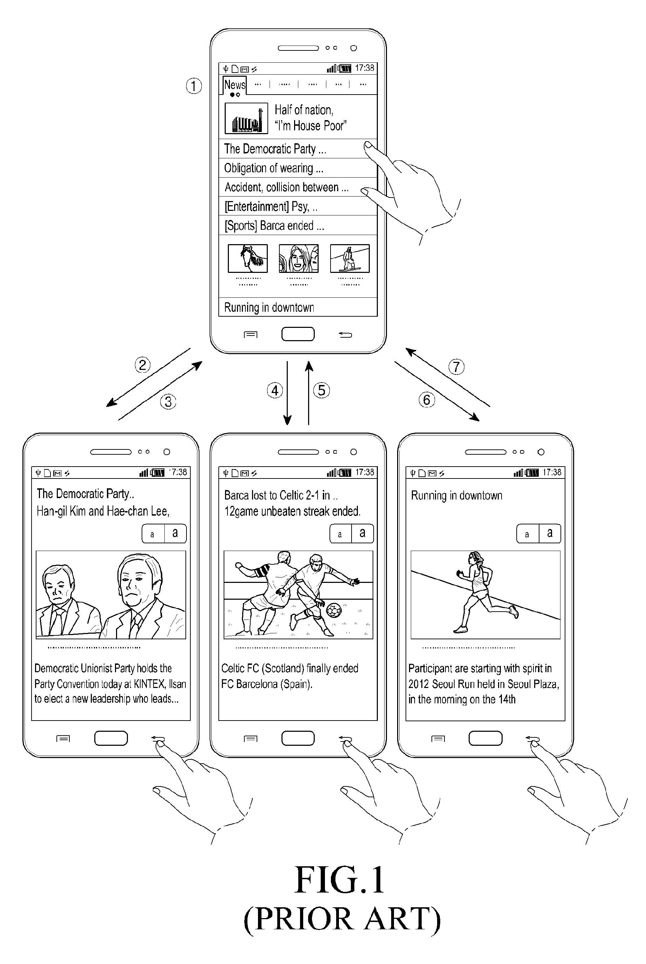

FIG. 1 illustrates a conventional method for providing web pages in a mobile device. When a link is selected by a user from a plurality of links in a main web page (①), the web page corresponding to the selected link is displayed (②). When on this page, in order to see a web page corresponding to another link on the main web page, the user must return to the main web page (by, for example, pressing a back button) (③), and then select another link on the main web page to jump to the corresponding web page (④). Once again, while on this page, in order to see yet another web page corresponding to yet another link on the main web page, the user must return to the main web page again (⑤) and again select yet another link to jump to the web page of that link (⑥), resulting in the repeated performance of the same steps.

In order to access the web pages corresponding to a plurality of links on a main web page using the method described above, the user must repeatedly perform key inputs for movement between the main web page and the web pages corresponding to the plurality of links, which is a problem.

### SUMMARY OF THE INVENTION

Accordingly, the present invention has been made in consideration of the above-described problems. One aspect of the present invention is to provide a method and apparatus capable of providing a plurality of web pages conveniently to a user of a mobile device.

In accordance with an aspect of the present invention, a method for providing web pages includes providing a main page including a plurality of links for web pages; adding, when at least one link is selected on the main page, the selected at least one link to a collect view list; configuring a collect view page by collecting web page data corresponding to the links added to the collect view list; and providing the collect view page.

In accordance with another aspect of the present invention, an apparatus for providing web pages to a terminal includes a key input unit configured to determine if a key has been input; a display unit configured to display data corresponding to at least any key that has been input; and a web page processing unit configured to provide a main page including a plurality of links for web pages, to add, when at least one link is selected on the main page, the selected at least one link to the collect view page list, to configure a collect view page by collecting web page data corresponding to the links added to the collect view list, and to provide the configured collect view page to the display unit.

In accordance with another aspect of the present invention, a terminal capable of providing web pages to a user includes a key input unit configured to determine if a key has been input; a display unit configured to display data corresponding to at least any key that has been input; and a control unit configured to control the terminal. The control unit includes a web page processing unit configured to provide a main page including a plurality of links for a web page; to add, when at least one link is selected on the main page, the selected at least one link to the collect view page list; to configure a collect view page by collecting web page data corresponding to the links added to the collect view list, and to provide the configured collect view page to the display unit.

### BRIEF DESCRIPTION OF THE DRAWINGS

The above and other aspects, features, and advantages of the present invention will be more apparent from the following detailed description taken in conjunction with the accompanying drawings, in which:
FIG. 1 illustrates a conventional method for providing web pages in a mobile terminal;
FIG. 2 is a schematic block diagram of a portable terminal according to an embodiment of the present invention;
FIG. 3 is a front side perspective view of a portable terminal according to an embodiment of the present invention;
FIG. 4 is another front side perspective view of a portable terminal according to an embodiment of the present invention;
FIG. 5 is a block diagram of an apparatus for providing web pages according to an embodiment of the present invention;
FIGS. 6A to 6D illustrate a collect view setting menu configured according to various embodiments of the present invention;
FIGS. 7A and 7B illustrate a main page configured according to an embodiment of the present invention;
FIG. 8 illustrates a collect view page configured according to an embodiment of the present invention;
FIG. 9 illustrates a web page included on a collect view page configured according to an embodiment of the present invention;
FIG. 10 illustrates a collective view page including a collect view page list configured according to an embodiment of the present invention;
FIG. 11 is a flowchart illustrating a sequence of steps for providing a web page according to an embodiment of the present invention; and
FIG. 12 is a flowchart illustrating detailed operations in the collect view page configuring step S1107 of FIG. 11, according to another embodiment of the present invention.

### DETAILED DESCRIPTION OF EMBODIMENTS OF THE PRESENT INVENTION

Hereinafter, various embodiments of the present invention will be described with reference to the accompanying drawings. In the following description, the same elements will be designated by the same reference numerals although they are shown in different drawings. Further, various specific definitions found in the following description are provided only to help general understanding of the present invention, and it is apparent to those skilled in the art that the present invention can be implemented without such definitions. Further, in the following description of the present invention, a detailed description of known functions and configurations incorporated herein will be omitted when it may make the subject matter of the present invention rather unclear.

Although terminology including ordinals, such as "first" and "second," may be used in describing various configurational elements, the configurational elements are not limited by such terminology, which is used merely to differentiate one configurational element from another. For example, a first configurational element may be referred to as a second configurational element and *vice versa* without departing from the scope of the present invention. Any such terminology used herein is not intended to limit the present invention but to aid in the description of specific embodiments. As another example, a term expressed in the singular includes the plural form as well, unless clearly indicated otherwise in context.

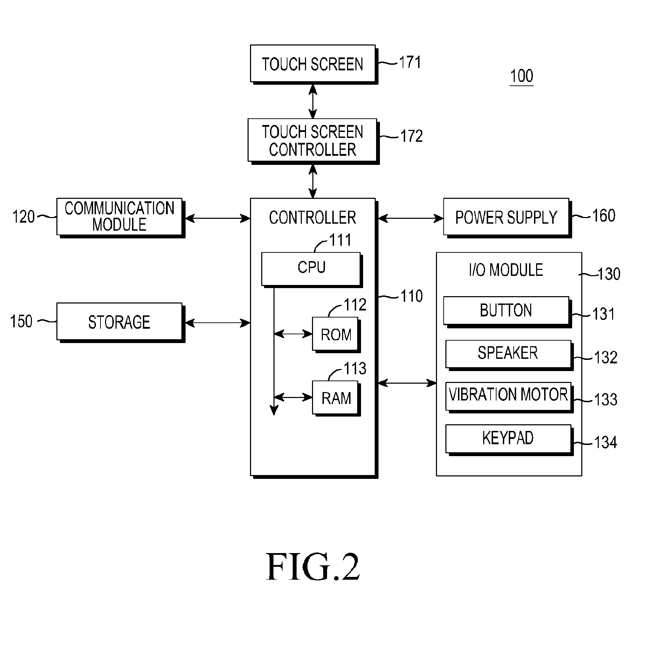

FIG. 2 is a schematic block diagram illustrating a portable terminal according to an embodiment of the present invention.

Referring to FIG. 2, terminal 100 includes control unit 110, communication module 120, input/output module 130, storage unit 150, power supply unit 160, touch screen 171, and touch screen controller 172.

In this embodiment, control unit 110 includes CPU 111, ROM 112 in which one or more programs are stored for controlling terminal 100, and RAM 113 which, e.g., stores signal/data input to terminal 100 or is used as memory for a process executed in terminal 100. CPU 111, ROM 112, and RAM 113 may be interconnected through one or more internal buses. In this embodiment, control unit 110 controls communication module 120, input/output module 130, storage unit 150, power supply unit 160, touch screen 171, and touch screen controller 172. Control unit 110 may be configured using a plurality of cores such as, e.g., a single-core, a dual-core, a triple-core, and a quad-core. A person having ordinary skill in the art could determine the appropriate configuration, including, e.g., the number of cores, according to the characteristics of the specific terminal or terminals involved.

Communication module 120 may include at least one of a cellular module, a wireless LAN module, and a local area communication module.

The cellular module allows terminal 100 to connect using one or more mobile communication protocols through one or more antennas under the control of control unit 110. The cellular module transmits/receives a wireless signal for, e.g., voice communication, image communication, and/or short message service (SMS) or multimedia message service (MMS), in order to communicate with, e.g., a portable phone, a smart phone, a tablet PC, or any other apparatus that has a phone number.

The wireless LAN module can connect to the Internet through a wireless access point (AP) under the control of control unit 110. The wireless LAN module supports, e.g., the wireless LAN standard (IEEE802.11x) of the Institute of Electrical and Electronic Engineers (IEEE). The wireless LAN module may assist a WPS (Wi-Fi Positioning System) determine the position of the terminal by using position information provided by a wireless access point (AP).

The local area communication module performs local area communication using wireless communication protocols, such as Bluetooth, IrDA (Infrared Data Association), Wi-Fi-Direct communication, and NFC (Near Field Communication).

According to the present embodiment, input/output module 130 includes button 131, speaker 132, and vibration motor 133.

Button 131 may be formed on any surface of terminal 100 and may comprise any one or more of a power/lock button, a volume button, a menu button, a home button, a back button, and a search button.

Speaker 132 outputs sound in response to various signals (e.g., wireless signals and broadcasting signals) from, e.g., the cellular module, the wireless LAN module, and the local area communication module under the control of control unit 110. One or more speakers 132 may be provided at one or more proper positions in the housing of terminal 100.

Vibration motor 133 converts an electrical signal to a mechanical vibration under the control of control unit 110. One or more vibration motors may be provided in the housing of terminal 100.

Speaker 132 and vibration motor 133 may be set to a specific volume operation mode. Volume operation modes include, for example, sound mode, vibration mode, sound and vibration mode, and silent mode. Control unit 110 controls speaker 132 and/or vibration motor 133 according to the current function being implemented by terminal 100, and based on the current volume operation mode.

Storage unit 150 stores signals and/or data input/output created or otherwise used in the operation of, e.g., communication module 120, input/output module 130, or touch screen 171, under the control of control unit 110. Storage unit 150 stores control programs and applications for terminal 100 and/or control unit 110.

The term "storage unit," as used herein, includes, depending on the context, storage unit 150, ROM 112 and RAM 113 within control unit 110, or a memory card installed in terminal 100 (e.g., an SD card or memory stick). The storage unit may comprise any one or more of a nonvolatile memory, a volatile memory, a hard disc drive (HDD), or a solid state drive (SSD).

Power supply unit 160 provides power to one or more batteries disposed in the housing of terminal 100 under the control of control unit 110. The one or more batteries supply power to terminal 100. Power supply unit 160 also supplies power input from external power sources, which may provide power to terminal 100 either through a wired cable or wirelessly input using wireless charging technology.

Touch screen 171 displays user interfaces corresponding to various services based on the operating system (OS) of terminal 100. Touch screen 171 transmits an analog signal corresponding to at least one touch input to a user interface to touch screen controller 172. Touch screen 171 may receive touch input directly from the user's body (e.g., fingers including a thumb) or through an input means (e.g., a stylus pen).

As known by those of ordinary skill in the art, the type of touch screen 171 may be, for example, resistive, capacitive, infrared , or acoustic.

Touch screen controller 172 controls the output of touch screen 171 so that display data provided from control unit 110 may be displayed on touch screen 171. In this embodiment, touch screen controller 172 converts the analog signal received from touch screen 171 into a digital signal (e.g., X and Y coordinates) and transmits the digital signal to control unit 110. Control unit 110 controls touch screen 171 using the digital signal received from touch screen controller 172. For example, control unit 110 may cause a shortcut icon displayed on the touch screen to be selected or execute an action corresponding to a shortcut icon in response to a touch event or a hovering event. In other embodiments, touch screen controller 172 may be implemented in control unit 110.

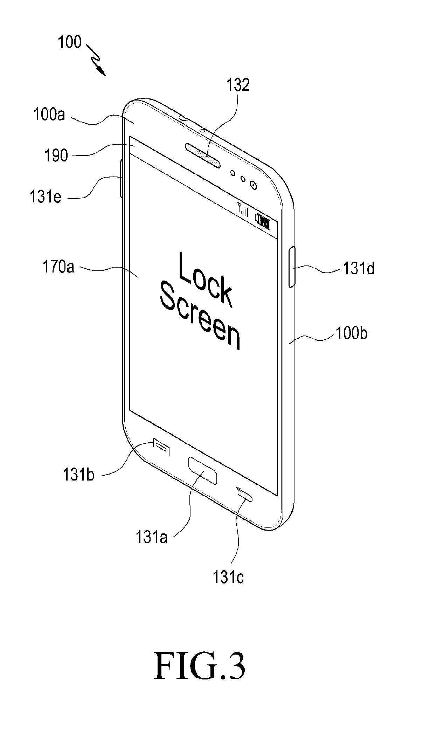

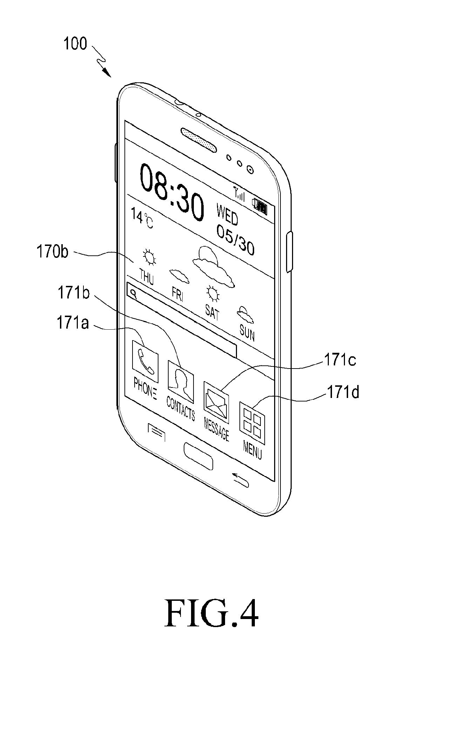

FIGS. 3 and 4 are perspective views of the front side of a terminal which can provide web pages according to an embodiment of the present invention.

Referring to FIG. 3, touch screen 171 is disposed on the front surface 100a of terminal 100. Touch screen 171 is large and occupies the greater part of front surface 100a of terminal 100. FIG. 3 illustrates an example in which lock screen 170a is displayed on touch screen 171. Lock screen 170a is the first screen displayed on touch screen 171 when terminal 100 is turned ON, and provides security by requiring a user to input security information (e.g., a password and a security pattern) before using terminal 100. Once control unit 110 confirms the validity of the security information (e.g., a password and a security pattern) input by the user, it releases the lock screen, and switches to home screen 170b, as shown in FIG. 4.

In other embodiments, the lock screen may be unlocked and switched to the home screen merely by the user's touch or drag input without receiving a password or security pattern as described above.

The home screen may include many different home screen pages, in which the first home screen page to be displayed, from among the many home screen pages, is the main home screen, which, in the embodiment shown in FIG. 4, is home screen 170b. In FIG. 4, home screen 170b displays shortcut icons 171a, 171b and 171c which are configured to execute frequently used applications, main menu switch key 171d, the time, and the weather. When selected, main menu switch key 171d displays a menu screen on touch screen 171. In this embodiment, status bar 190 at the top of touch screen 171 indicates one or more conditions of terminal 100, including, e.g., battery charge and received signal intensity as shown here, as well as the current time and volume operation mode,.

In this embodiment, home button 131a, menu button 131b and back button 131c are at the lower part of touch screen 171.

Home button 131a displays the main home screen on touch screen 171. If home button 131a is pressed when a menu screen or any home screen different from the main home screen is being displayed on touch screen 171, touch screen 171 switches to the main home screen. Also, if home button 171a is pressed while one or more applications are using touch screen 171, touch screen 171 switches to the main home screen illustrated in FIG. 4. In some embodiments, pressing home button 131a will cause recently used applications or a task manager to be displayed on touch screen 171.

Menu button 131b provides a connection menu capable of being used on touch screen 171. The connection menu may include, e.g., a widget addition menu, a background screen change menu, a search menu, an edit menu, an environment setting menu, or the like.

Back button 131c causes the screen executed just prior to the current screen to be displayed or, in some cases, may end the most recently used application.

Speaker 132 is disposed at the upper center portion of front surface 100a of terminal 100 in this embodiment, and power/reset button 131d and volume button 131e are provided on the side surface of terminal 100.

Although terminal 100 in the present embodiment includes a touch screen capable of both input and output and includes a touch screen controller, the present invention is not limited to this. For example, the terminal may have a display panel which can only be used as a display, and a separate input means, e.g., a keypad.

Embodiments of the present invention as described herein may be implemented in program instructions that are executed by various computer means and recorded in a computer readable medium. The computer readable medium may contain, for example, program instructions, data files, and data structures, separately or in combination. The program instructions may be especially designed and configured for the present invention or those well-known to, and capable of being implemented by, a person having ordinary skill in the computer software field.

For example, methods according to embodiments of the present invention may be implemented by program instructions stored in storage unit 150 of terminal 100, and some or all of those instructions, when executed, may be temporarily stored in RAM 113 included in control unit 110. In such a manner, control unit 110 may control hardware components in response to program instructions embodying methods according to embodiments of the present invention, temporarily or continuously store data produced while executing those program instructions in storage unit 150, and provide UIs required for executing methods according to the embodiments of the present invention to touch screen controller 172.

Hereinbelow, an apparatus for providing web pages according to an embodiment of the present invention is provided for the above-described portable terminal. However, the present invention is of course not limited to this embodiment, and an apparatus according to embodiments of the present invention could be provided in various other types of terminals, for example, a personal computer, a lap-top computer or a tablet PC that includes a web browser.

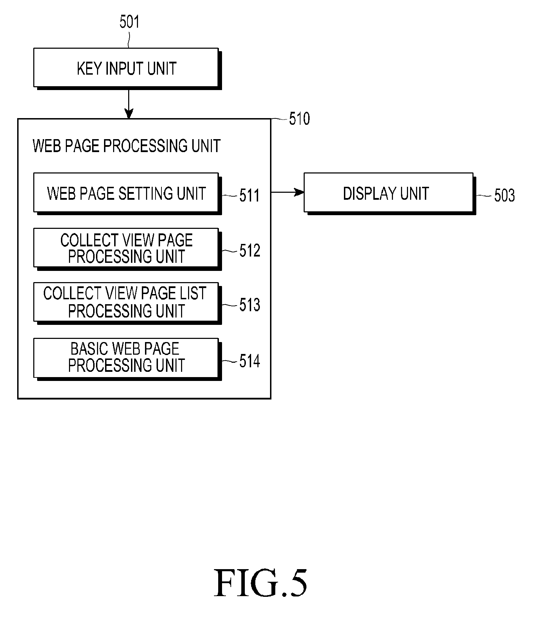

FIG. 5 is a block diagram illustrating the configuration of an apparatus for providing web pages according to an embodiment of the present invention. Referring to FIG. 5, the apparatus according to the present embodiment includes key input unit 501, display unit 503, and web page processing unit 510.

Key input unit 501 determines if a key has been input by the user and determines the input corresponding to the key. Key input unit 501 may be a keypad, such as keypad 134 in FIG. 2, and is configured to enable a user to select contents displayed on display unit 503. For example, key pad 134 in FIG. 2 may include movement keys of left, right, up and down directions so that the user may select one or more regions within a display area that is divided into multiple regions on display unit 503, and then press a confirmation (or selection) key to input the selected one or more regions. Alternatively, key input unit 501 may be, for example, a single confirmation (or selection) key that confirms the one or more regions selected by the user using touch screen 171 in FIG. 2. In such a case, a key input module, provided in control unit 110, receives the coordinates of the region where a touch input event has taken place through touch screen 171 and, if the confirmation (or selection) key is pressed, provides the detected region to web page processing unit 510.

When a character input apparatus according to embodiments of the present invention is provided in a personal computer, a lap-top computer or the like, key input unit 501 may be, for example, a mouse or a keyboard connected to the personal computer or the lap-top computer as an input device.

Display unit 503 displays data provided by multiple sources. Display unit 503 may include touch screen 171 and touch screen controller 172 shown in FIG. 2, and is configured to display data provided by web page processing unit 510.

Web page processing unit 510 receives data configured according to a predetermined rule or protocol, e.g., HTML (HyperText Markup Language), in order to display a web page, and produces data for displaying the web page on display unit 503 based on that predetermined rule/protocol. Web page processing unit 510 is also configured such that, when a main page containing a plurality of links for web pages is displayed, it can provide a collect view page formed by combining and integratedly processing one or more links selected by the user on the main page.

In this embodiment, web page processing unit 510 includes web page setting unit 511, collect view page processing unit 512, and basic web page processing unit 514.

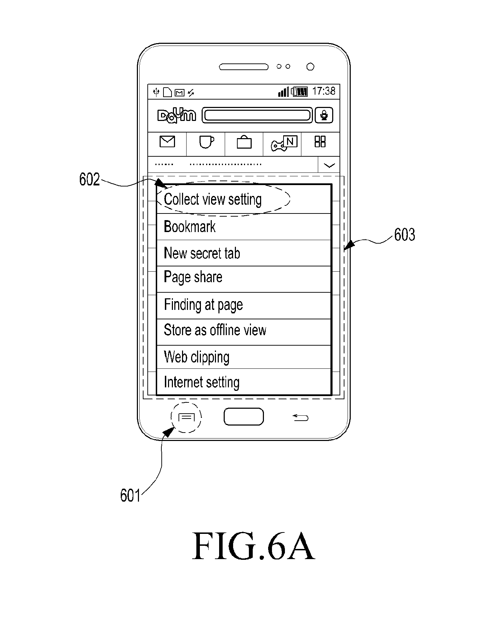

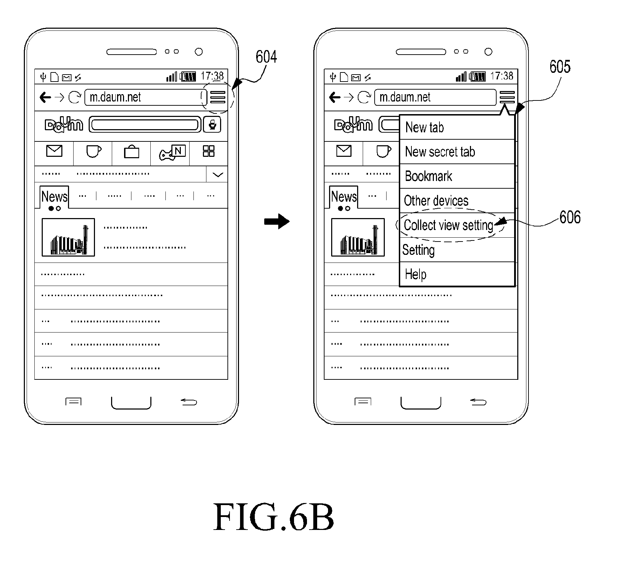

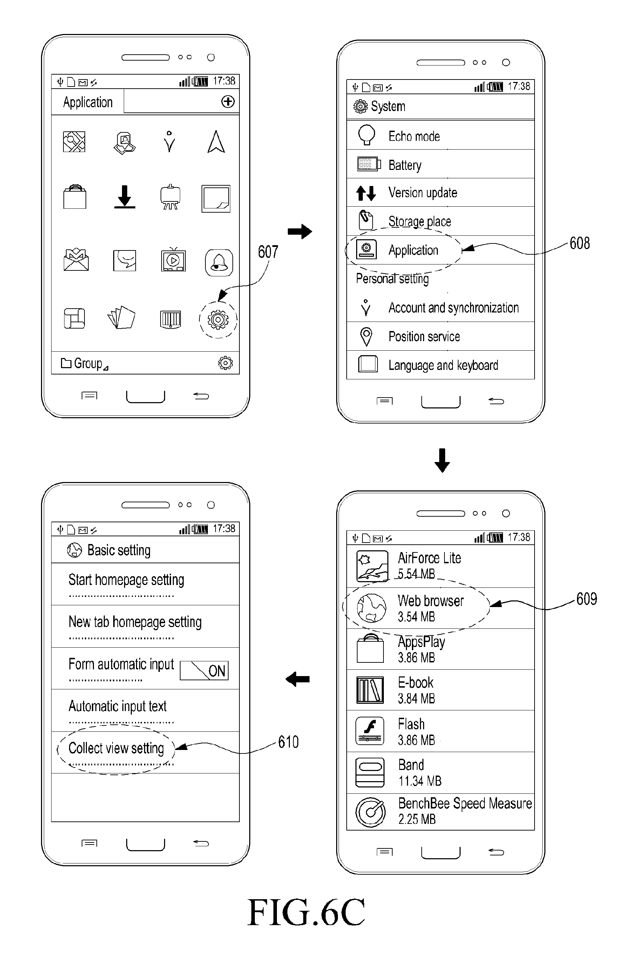

Web page setting unit 511 provides a collect view setting menu by which a user chooses whether or not to use the collect view page function. The selection chosen using collect view setting menu 511 may be stored as a user preference. The web browser may provide a setting menu, by which the user selects settings associated with web pages, and the collect view setting menu may be a sub-menu of that setting menu, where, if the sub-menu is selected, the user can select whether or not to use the collect view page function. As illustrated in FIG. 6A, when menu key 601 is pressed while in the web browser, the web browser provides setting menu 603 which includes collect view setting menu 602 as a sub-menu. Alternatively, as illustrated in FIG. 6B, the web browser provides settings menu key 604 in the web browser window as displayed on the screen and, when settings menu key 604 is selected, setting menu 605 pops up, and includes collect view setting menu 606 as a sub-menu. Alternatively, as illustrated in FIG. 6C, a general settings button 607 may be displayed on the touch screen, which, if selected, leads to a general settings page, which has, as a choice, application setting menu button 608 which, if selected, provides a screen showing a list of applications for which settings and preferences may be entered. That list includes Web browser 609 which, if selected, provides a menu of web browser settings, including collect view setting menu button 610.

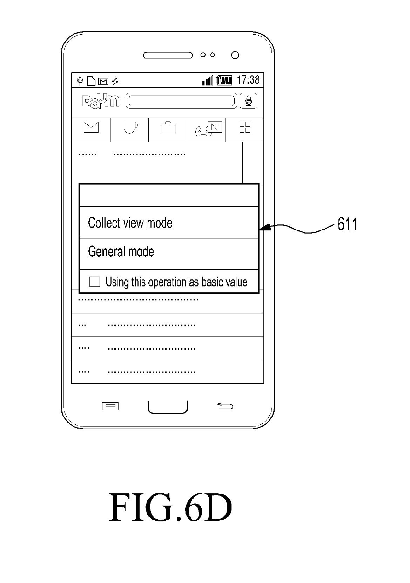

As a further alternative, illustrated in FIG. 6D, when the web browser is being used, web page setting unit 511 may provide mode selection window 611 as a pop up window in which the user can select whether to display the current web page in general Internet mode or using the collect view page function. Mode selection window 611 may pop up when the web browser starts.

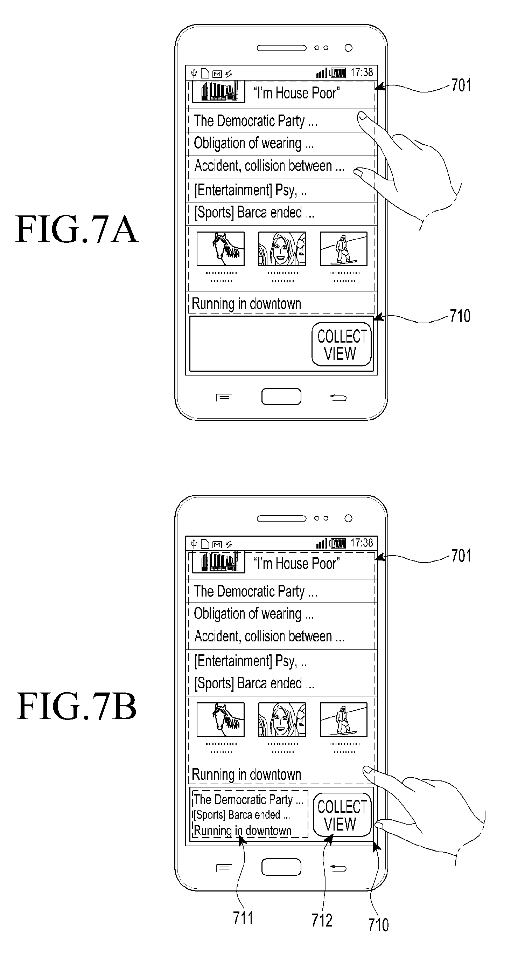

Collect view page processing unit 512 operates when the collect view page function is used. Collect view page processing unit 512 receives data configured according to a predetermined rule/protocol so as to configure a web page, configures the web page based on the predetermined rule/protocol, and configures a main page as illustrated in FIGS. 7A and 7B, that includes main window 701 in which links on the web page are identified (by, e.g., the titles of the linked pages), and collect view window 710 in which any links selected by the user are displayed.

Collect view page processing unit 512 determines whether a region where a link is displayed has been selected by the user through, e.g., key input unit 501. Collect view page processing unit 512 receives the link corresponding to the selected region, and puts the link identifier corresponding to that link in collect view window 710. In the embodiment shown in FIG. 7B, collect view window 710 includes link display 711 in which one or more of the link identifiers are displayed, and collect view request button 712 by which the user requests the collect view page. When collect view request button 712 is selected, the collect view page is displayed. To configure the collect view page, collect view processing unit 512 collects the web page data indicated by the links corresponding to the link identifiers shown in link display 711.

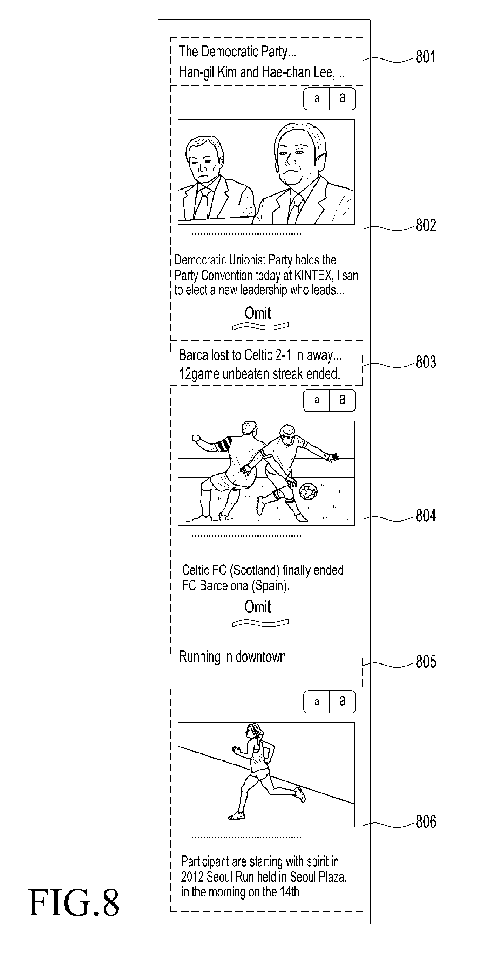

In the present embodiment, the collect view page is a single web page configured by sequentially connecting and configuring all of the web pages indicated by the links selected by the user and corresponding to the link identifiers shown in the link display. In the example shown in FIG. 8, the collect view page is a web page comprising, from the top to the bottom, web page title 801 and web page contents 802 corresponding to the first link, web page title 803 and web page contents 804 corresponding to the second link, and web page title 805 and web page contents 806 corresponding to the third link.

In one embodiment, collect view page processing unit 512 ensures that the entire collect view page is shown at once on display unit 503 by shrinking and/or enlarging the text or media (e.g., an image or a moving picture) included on the collect view page.

In another embodiment, collect view page processing unit 512 configures the collect view page so that only a portion is shown on the display screen and the user may scroll vertically and/or horizontally to see other portions of the collect view page, thereby providing the text or media included on the page in a size that can be readily recognized by the user. The collect view page shown in FIG. 8 may be displayed in this manner.

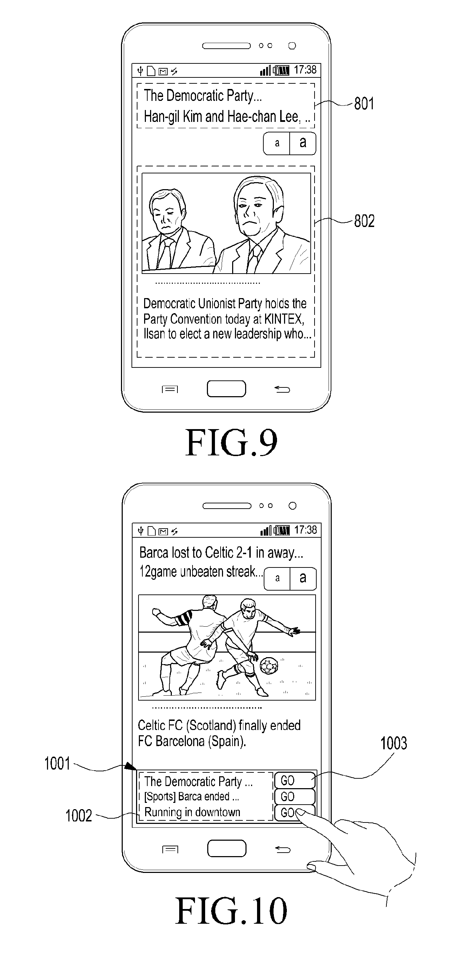

In another embodiment, collect view page processing unit 512 configures the collect view page so that the title and contents of each web page is separated out and shown one by one in the display, as title 801 and content 802 of a single web page are shown in the screen illustrated in FIG. 9, and the user may display the web pages corresponding to the respective links one by one by clicking between them.

Basic web page processing unit 514 operates when the general web page mode is selected-i.e., when the collect view page function is not being used. Basic web page processing unit 514 produces and provides a conventional web page to display unit 503, and performs operations corresponding to inputs from key input unit 501 such as, for example, displaying a web page of a link selected by key input unit 501.

In some embodiments, web page processing unit 510 includes collect view page list processing unit 513. Collect view page list processing unit 513 enables faster and more convenient movement within the collect view page by providing a collect view page list in which a link may be selected from the plurality of links included on the collect view page. In one embodiment, collect view page list processing unit 513 detects the starting position and title of each of the web pages in the collect view page, and provides the collect view page list, which includes the start position and title of each of the web pages in the collect view page, to collect view page processing unit 511, which configures a collect view page list to be included on the collect view page. As shown on the screen of the mobile terminal in FIG. 10, the collect view page includes collect view page list window 1001, in which collect view link display 1002 shows the title of each of the web pages included in the collect view page list, and alongside each title appears a web page moving request button 1003 by which the user can jump to the position of the web page corresponding to the title. A method for providing web pages according to an embodiment of the present invention will be described below, with reference to the apparatus for providing web pages as described above. In the method according to this embodiment of the present invention, the web browser has a web page display mode which may be set to either a collect view mode that provides a collect view page or to a general mode that provides a conventional web page.

The web page display mode is set using web page setting unit 511 in web page processing unit 510. As discussed in reference to the examples shown in FIGS. 6A-6D, web page setting unit 511 provides an environment configured such that the user can select whether to use the collect view page function or not. As shown in the example of FIG. 6A, the web browser provides a setting menu in which a collect view setting menu is a sub-menu and the user selects whether or not to use the collect view page function using the collect view setting menu.

In the embodiment discussed below, the user, by means of web page setting unit 511, sets the web page display mode in advance.

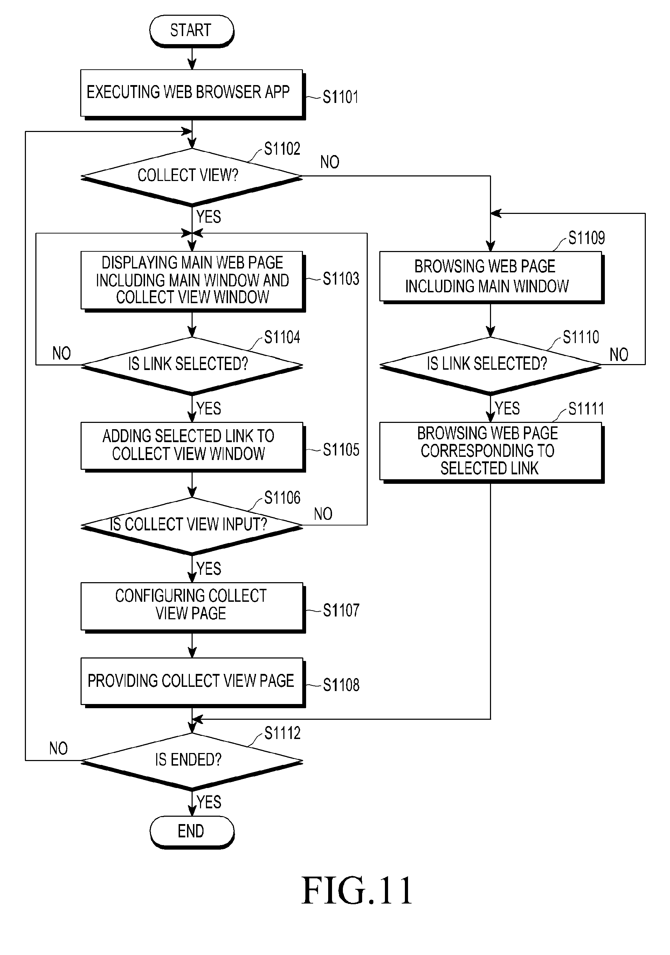

FIG. 11 is a flowchart illustrating a sequence of steps for providing web pages according to an embodiment of the present invention.

Referring to step S1101 1 in FIG. 11, the method starts when execution of the web browser is requested.

In step S1102, web page setting unit 511 determines whether the web page display mode is set to the collect view mode that provides a collect view page or to the general mode that provides a conventional web page. As described above, in this particular embodiment, the web page display mode is set in advance by the user using the environment provided by the web page setting unit 511. In other embodiments, a mode selection window provided by web page setting unit 511 appears as a popup window when the web browser is first opened, and the user chooses whether to proceed in collect view mode or in general mode.

If it is determined in step S 1102 that the web page display mode is set to the collect view mode, web page processing unit 510 instructs collect view page processing unit 512 to proceed with step S1103, and if it is determined that the web page display mode is set to the general view mode, web page processing unit 510 instructs basic web page processing unit 514 to proceed with step S 1109.

In step S 1103, collect view page processing unit 512 receives data configured according to a predetermined rule or protocol, e.g., HTML (Hypertext Markup Language), so as to configure a web page, and configures the web page based on the predetermined rule/protocol. Specifically, in the present embodiment, collect view page processing unit 512 configures a main web page as shown in FIG. 7A, which includes main window 701 in which link identifiers (e.g., titles of linked pages or the like) for each of the links included on the downloaded web pageare displayed, and collect view window 710 which displays any links selected by the user.

In step S1104, collect view page processing unit 512 determines whether the user has selected any of the link identifiers displayed in main window 701. Collect view page processing unit 512 configures collect view window 710 to include link display 711 in which any selected link identifiers are displayed, and collect view request button 712 through which the user can request the collect view page.

If it is determined that the user has selected a link identifier from main window 701 in step S1104, collect view page processing unit 512 receives the link corresponding to the selected link identifier, and, in step S 1105, adds the selected link identifier to link display 711 in collect view window 710, as shown in FIG. 7B.

In step S1106, it is determined whether the user has, by inputting collect view request button 712, requested the collect view page.

If it is determined the user has requested the collect view page by selecting and inputting collect view request button 712, collect view page processing unit 512 configures the collect view page in step S1107 by collecting the web page data of the links corresponding to the link identifiers included in link display 711.

If the user has not requested the collect view page in step S1106, the process returns to step S1103 so that, until collect view request button 712 is selected by the user, steps S1103 to S1106 may be repeatedly performed, and the user may select a plurality of link identifiers to be added to link display 711 of collect view window 710.

The collect view page configured in step S1107 may be a single web page configured by sequentially connecting the web pages corresponding to the one or more link identifiers in collect view window 710. For example, as discussed in reference to FIG. 8 above, the collect view page may be a single web page configured by sequentially connecting the web page title 801 and contents 802 corresponding to the first link, the web page title 803 and contents 804 corresponding to the second link, and the web page title 805 and contents 806 corresponding to the third link.

In step S1108, collect view page processing unit 512 provides the collect view page to display unit 503. Collect view page processing unit 512 may configure the collect view page in such a manner that display unit 503 displays the web pages corresponding to the respective links one by one on the screen as shown in FIG. 9. The collect view page may be configured such that the user can scroll vertically or horizontally to see each web page on the screen, one by one.

Returning to step S1102, if it is determined that the web display mode is not set to collect view mode, the method continues in step S1109, where basic web page processing unit 514 operates without using the collect view page function. Basic web page processing unit 514 produces a web page configured to include a generally used web page and provides the produced web page to display unit 503.

If, in step S1110, it is determined that the user has selected a link on the displayed web page, basic web page processing unit 514 retrieves the web page corresponding to the selected link, and provides the retrieved web page to display unit 503 in step S111. Steps S1102 to S1111 may be repeatedly performed until the user exits the web browser application, as indicated by step S1112. The web browser application may end when an end key is input by the user, or based on the operation of the character input application according to a terminal operation policy. For example, the terminal operation policy may be to end any character input application if the character input application is in a standby state or non-activated state without being displayed on the display or if the character input application is not displayed for a predetermined length of time.

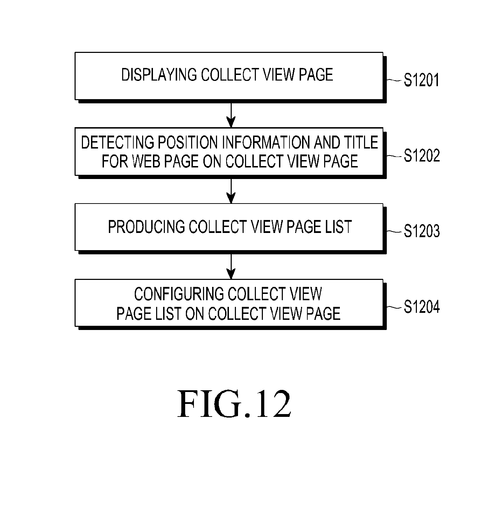

FIG. 12 is a flowchart illustrating the detailed operations of the collect view page configuration step S1107 of FIG. 11, according to an embodiment of the present invention where a collect view page list is generated and displayed on the collect view page, as shown and discussed above in regards to FIG. 10. Referring to FIG. 12, first, in step S1201, collect view page processing unit 512 produces the collect view page as discussed above, i.e., by collecting the web page data, i.e., web page titles, web page contents, etc. of the links corresponding to the link identifiers selected by the user and shown in link display 711. For example, as shown in FIG. 8, a collect view page may be configured by sequentially connecting the web page title 801 and contents 802 corresponding to the first link, the web page title 803 and contents 804 corresponding to the second link, and the web page title 805 and contents 806 corresponding to the third link.

Next, collect view page processing unit 512 initiates the operation of collect view page list processing unit 513. Collect view page list processing unit 513 configures a collect view page list in order to enable a faster and more convenient way for the user to jump within the collect view page to any one of the plurality of links included on the collect view page.

As indicated by step S1202, collect view page list processing unit 513 begins by detecting information for the start position of each web page within the collect view page, i.e., the region where each web page title is positioned among the plurality of web page data included on the collect view page. Collect view page list processing unit 513 also detects each web page title. In step S1203, collect view page list processing unit 513 produces a collect view page list including the start position of each web page within the collect view page and the title of each web page detected in step S1202. Collect view page list processing unit 513 provides the produced collect view page list to collect view page processing unit 512.

In step S1204, collect view page processing unit 512 configures the collect view page to include the collect view page list. As shown in the example of FIG. 10, the collect view page adds collect view page list window 1001 to the bottom of the collect view page. Collect view page list window 1001 is configured to include collect view link display 1002 in which each web page title included in the collect view page list is displayed, and, next to each web page title, a web page movement request button 1003 is displayed, through which a user requests to jump to a position on the collect view page corresponding to that web page title.

Consequently, the collect view page is configured in such a manner that when the user selects and inputs web page movement request button 1003, the start position of the web page corresponding to the selected button is determined by collect view page processing unit 512, and the display moves to the determined start position of the web page within the collect view page.

According to embodiments of the method and apparatus according to the present invention, web pages corresponding to a plurality of links may be efficiently provided to a user of a terminal.

Also according to embodiments of the present invention, a user may browse or access web pages corresponding to a plurality of links more conveniently and naturally without repeated key input or screen switch.

The methods according to the embodiments of the present invention may be implemented in the form of program instructions recorded on a non-transitory computer medium and executed through various computer means. The computer readable medium may include program instructions, data files, and data structures, separately or in combination. The program instructions recorded in the computer readable medium may be specifically designed for the present invention or well-known to, and capable of being implemented by, a person of ordinary skill in the computer software field.

While the present invention has been shown and described with reference to certain embodiments thereof, it will be understood by those skilled in the art that various changes in form and details may be made therein without departing from the spirit and scope of the present invention as defined by the appended claims. For example, according to embodiments of the present invention, although the state node has been described through a particular menu as an example, and the event has been described through a particular event as an example, the present invention is not limited thereto. Therefore, the scope of the present invention should not be defined by the embodiments of the present invention, but should be defined by equivalents to the claims.

## Claims

1. A method for providing web pages in a terminal, the method comprising:
providing a main page including a plurality of links for web pages;
adding, when at least one link is selected on the main page, the selected at least one link to a collect view list;
configuring a collect view page by collecting web page data corresponding to the links added to the collect view list; and
providing the collect view page.

2. The method of claim 1, wherein configuring the collect view page comprises:
combining the collected web page data into a single web page which comprises the collect view page.

3. The method of claim 1, wherein collecting web page data corresponding to the links added to the collect view list in order to configure the collect view page comprises, for each link on the collect view list:
collecting a title of a web page corresponding to the link; and
collecting at least some content from the web page corresponding to the link.

4. The method of claim 3, wherein configuring the collect view page comprises:
configuring the collect view page to comprise a plurality of regions, each region having the title and at least some content of a web page corresponding to one link in the collect view list.

5. The method of claim 1, wherein configuring the collect view page comprises:
detecting position information and titles of the web pages in each region of the collect view page;
producing a collect view page list including the titles of the web pages linked with the position information; and
configuring a collect view page list on the collect view page.

6. The method of claim 5, further comprising:
displaying, in response to the selection of a title of a web page included in the collect view page list, the region on the collect view page where the title and at least some content of the selected web page is displayed.

7. The method of claim 1, wherein the main page comprises:
a first window that displays at least one item of information for each of the plurality of links included on the main page; and
a second window that displays the collect view list.

8. The method of claim 7, wherein the second window comprises:
a link display that displays the at least one item of information for any selected link; and
a collect view request button that requests the provision of the collect view page.

9. An apparatus for providing web pages in a terminal, the apparatus comprising:
a key input unit configured to determine if a key has been input;
a display unit configured to display data corresponding to at least any key that has been input; and
a web page processing unit configured to provide a main page including a plurality of links for web pages, to add, when at least one link is selected on the main page, the selected at least one link to the collect view page list, to configure a collect view page by collecting web page data corresponding to the links added to the collect view list, and to provide the configured collect view page to the display unit.

10. The apparatus of claim 9, wherein the web page processing unit comprises:
a web page setting unit configured to set a web page display format, and
a collect view page processing unit configured to process the configuration of the collect view page.

11. The apparatus of claim 9, wherein the web page processing unit comprises:
a collect view page list processing unit configured to detect position information of a region within the collect view page corresponding to a link and the title of the web page corresponding to that link, and to produce a collect view page list including the title of the web page linked with the position information.

12. The apparatus of claim 11, wherein the web page processing unit configures the collect view page provided from the collect view page list processing unit on the collect view page.

13. The apparatus of claim 12, wherein the web page processing unit, in response to the selection of a title of a web page included in the collect view page list, causes the display unit to display the region on the collect view page corresponding to the link corresponding to the selected title.

14. The apparatus of claim 9, wherein web page processing unit is configures the main page so that it includes a first window configured to display at least one item of information for each of the plurality of links on the main page, and a second window configured to display the collect view list.

15. The apparatus of claim 14, wherein the web page processing unit configures the second window to include a link display configured to display the at least one item of information for each selected link, and a collect view request button configured to request the provision of the collect view page.
